# EUROPÄISCHE PATENTSCHRIFT

(11) **EP 0 829 718 B1**
(45) Veröffentlichungstag und Bekanntmachung des Hinweises auf die Patenterteilung: **14.04.2004**
(21) Anmeldenummer: 97115445.5
(22) Anmeldetag: 06.09.1997
(51) Int. Cl.: G01N 33/00

(54) **Gasanalysegerät und Verfahren zur Identifikation und/oder Bestimmung der Konzentration von zumindenst einer Gaskomponente**
Apparatus and process for identifying and/or determining the concentration of at least one gas component
Appareil et procédé d'identification et/ou de mesure de la concentration d'au moins un composant gazeoux

(30) Priorität: 11.09.1996 DE 19639072
(43) Veröffentlichungstag der Anmeldung: 18.03.1998
(73) Patentinhaber: Kohler, Heinz, Prof. Dr., 77815 Bühl (DE)
(72) Erfinder: Kohler, Heinz, Prof. Dr., 77815 Bühl (DE); Becker, Ralf, 76315 Linkenheim (DE); Link, Norbert, Dr., 76187 Karlsruhe (DE); Röber, Jörg, 76337 Waldbronn (DE)
(74) Vertreter: Pietruk, Claus Peter, Dipl.-Phys.

(56) Entgegenhaltungen:
- EP-A- 0 092 068
- EP-A- 0 675 357
- US-A- 4 399 684
- R. M. HAWK: "INCREASING THE SELECTIVITY OF COMMERCIALLY AVAILABLE TIN OXIDE BASED GAS SENSORS FOR MONITORING COMBUSTIBLE GASES IN PROCESS ENVIRONMENTS" JOURNAL OF VACUUM SCIENCE AND TECHNOLOGY: PART A., Bd. 13, Nr. 3, 1995, NEW YORK US, Seiten 996-1000, XP000531600

## Beschreibung

Die Erfindung betrifft die Oberbegriffe der unabhängigen Ansprüche. Damit befasst sich die Erfindung allgemein mit der Analyse von Gasen, insbesondere mittels Halbleitergassensoren.

Halbleiter-Gassensoren sind Metalloxidelemente, deren elektrischer Widerstand beziehungsweise elektrische Leitfähigkeit in Abhängigkeit von der Gaszusammensetzung in ihrer Umgebung variiert. Im Fall von n-Halbleitern ist an der Luft diese Leitfähigkeit verhältnismäßig niedrig; sie resultiert nach einem einfachen Modell daraus, daß an der Oberfläche der Metalloxidelemente Leitungselektronen an dort adsorbierte Sauerstoffpartikel abgegeben werden. Diese werden dabei negativ aufgeladen und liegen als negativ geladene Ionen an der Oberfläche der Metalloxidelemente vor.

Viele Gase reagieren mit den an der Oberfläche adsorbierten Sauerstoffionen und bewirken dadurch eine Erhöhung der Leitfähigkeit durch die zurückbleibenden Elektronen. Andere Gase wie zum Beispiel Sauerstoff erniedrigen die Leitfähigkeit, indem sie an der Oberfläche der Metalloxidelemente adsorbieren und Leitungselektronen immobilisieren/lokalisieren. Bei Erwärmung des Metalloxidelementes auf üblicherweise einige 100°C stellt sich an dessen Oberfläche ein Gleichgewichtszustand ein, in dem Konzentrationsänderungen einer Gaskomponente der Umgebung grundsätzlich zu einer (reversiblen) Leitfähigkeitsänderung in dem Metalloxidelement führt. Ober eine Messung des elektrischen Widerstands kann diese Leitfähigkeitsänderung einfach erfaßt und zum Nachweis der Gaskonzentrationsänderung benutzt werden. Mit Detektorelementen dieser Art können Konzentrationsänderungen der zu analysierenden Gase noch im ppm-Bereich nachgewiesen werden.

Halbleiter-Gassensoren werden hauptsächlich eingesetzt als Warnmelder z. B. vor Undichtigkeiten in Gasanlagen, vor Rauchentwicklungen im Brandfall, als Leckagedetektoren zur Überwachung von Kühlanlagen oder als Alarmgeber vor einer Vielzahl von toxischen Gasen. Hinsichtlich der Materialbeschaffenheit werden dabei vorzugsweise Halbleiter-Gassensoren vom SnO2-Typ verwendet, da diese eine hohe Empfindlichkeit, einen niedrigen Stückpreis und eine sehr einfache, preiswerte Meßtechnik aufweisen.

In vielen Anwendungsfällen können Halbleiter-Gassensoren, die Einzeldetektoren sind, die an sie gestellten Anforderungen erfüllen, weil die potentielle Gefahr eingrenzbar ist, d. h. nur in Form einer bestimmten Gasentwicklung auftreten kann, wie z. B. bei Gasaustritt aus einem Gasofen. Für solche Fälle ist es deshalb unerheblich, daß die Selektivität der Sensorelemente bei konventionellem Betrieb, d. h. bei Betrieb bei konstanter Arbeitstemperatur nur mangelhaft ist. Andererseits sprechen die Sensoren beispielsweise bei konventioneller Betriebsweise ähnlich empfindlich auf Erd- oder Stadtgas wie auf Lösungsmitteldämpfe eines Reinigungsmittels an. Dieses Verhalten zieht natürlich die Gefahr von Fehlalarmen nach sich. Eine Selektivitätssteigerung bei Beibehaltung der Empfindlichkeit und bei möglichst geringer Kostensteigerung ist nicht zuletzt deshalb wünschenswert.

Ein anderes bedeutsames Anwendungsgebiet ist die Überwachung von Abwässern oder Abluft aus chemischen Prozessen oder die insitu-Bodensanierung. Bei der insitu-Bodensanierung, beispielsweise nach einer Ölkontamination, die einen Grundwasserleiter bedroht, werden die Verunreinigungen biologisch, mit Hilfe entsprechend geeigneter Bodenbakterien abgebaut. Zu diesem Zweck werden die Bodenbakterien in Filtertanks angereichert, die mit Wasser aus dem Kontaminationsgebiet durchspült werden. Die in dem Wasser enthaltenen Ölsubstanzen werden von den Bakterien abgebaut und das entsprechend gereinigte Wasser wird wieder zurückgeführt. Der Kreislauf wird solange durchlaufen, bis die Kontamination unterhalb bestimmter Grenzwerte liegt, woraus sich die Notwendigkeit ergibt, den Sanierungsverlauf meßtechnisch zu erfassen. Hierfür ist insbesondere die quantitative Erfassung bestimmter - oft gasförmiger - Leitstoffe oder Leitstoffgruppen wie z. B. Benzol, Toluol, Xylol oder polyzyklische aromatische Kohlenwasserstoffe erforderlich. Nach dem Stand der Technik sind solche Erfassungen nur mit aufwendiger und teurer Laboranalytik möglich, weshalb Messungen bisher nur in groben Zeitrastern an wenigen Probenentnahmestellen durchgeführt werden. Außerdem stehen die Ergebnisse erst mehrere Tage nach der Probenentnahme zur Verfügung, wodurch u. U. wertvolle Reaktionszeit verloren geht. Eine Feinregelung der Prozesse ist somit auch nicht möglich und die Sanierungsanlagen laufen infolgedessen häufig mit wesentlich höherer Leistung als eigentlich erforderlich wäre.

Um die genannten Probleme zu beheben und um verschiedene Gase selektiv nachweisen zu können, ist bereits vorgeschlagen worden, mehrere der vorbeschriebenen einzelnen Detektorelemente (Halbleiterelemente) zu einer Einheit, einem sog. Multisensor, zusammenzufassen und entweder jedes dieser Einzeldetektorelemente mit einer selektiv permeablen Membran zu umhüllen oder bei verschiedenen konstanten Temperaturen und/oder mit unterschiedlichen Katalysatorzusätzen zu betreiben. Dadurch ist jedes Einzeldetektorelement für verschiedene Gase unterschiedlich sensitiv, und der Multisensor kann - entsprechend seiner verschiedenen Einzeldetektorelement-Bausteine - gegebenenfalls unter Anwendung von numerischen Mustererkennungsmethoden, zum selektiven Nachweis verschiedener Gase eingesetzt werden.

Zum Beispiel beschreibt die DE 43 21 736 Al einen Halbleiter-Gassensor, bei dem mehrere gassensitive Schichten, die entweder zu einem einzigen oder zu mehreren Sensorelementen gehören, bei verschiedenen, jedoch zeitlich konstanten Temperaturen betrieben werden. Das heißt, hier handelt es sich um ein System - ein sog. Sensor-Array -, das aus mehreren sensitiven Schichten besteht, deren Widerstände (oder Leitwerte = 1/Widerstand) separat gemessen werden.

Dieses bekannte Prinzip ist jedoch sehr kostenaufwendig, da z. B. die gegebenenfalls benötigten Membranen mit der gewünschten Permeabilität oftmals nur unter erheblichem technischen Aufwand durch chemische und/oder physikalische Präparationsverfahren gewonnen werden können.

In den Anwendungsfällen, in denen die Art und Anzahl der nachzuweisenden Gaskomponenten bekannt und eingeschränkt ist und die jeweiligen Konzentrationen der verschiedenen Gaskomponenten bestimmt werden müssen, besteht nach dem Stand der Technik die Möglichkeit, diese anhand von zuvor für die betreffenden einzelnen Gaskomponenten erstellten Eich- bzw. Kalibrierprofilen zu bestimmen.

Diese Eich- bzw. Kalibrierprofile werden dadurch gewonnen, daß für ein bestimmtes Gas und eine bestimmte Konzentration dieses Gases die Leitfähigkeit (Leitwert) des Sensors in Abhängigkeit von der Temperatur des Sensors bestimmt und graphisch dargestellt wird. Die Temperatur des Sensors wird dabei üblicherweise periodisch verändert, indem der Sensor in aufeinanderfolgenden Zyklen immer wieder gleichmäßig erhitzt und wieder abgekühlt wird. Die graphische Darstellung dieser Temperaturzyklen, d. h. der Sensortemperatur in Abhängigkeit von der Zeit, ergibt eine sinusförmige bzw. dreieckig-zickzackförmige Kurve. Bei der Erstellung der gasspezifischen Leitwert-Zeit-Profile werden üblicherweise die gemessenen Leitwerte gegen die Zeit und nicht gegen die Temperatur aufgetragen.

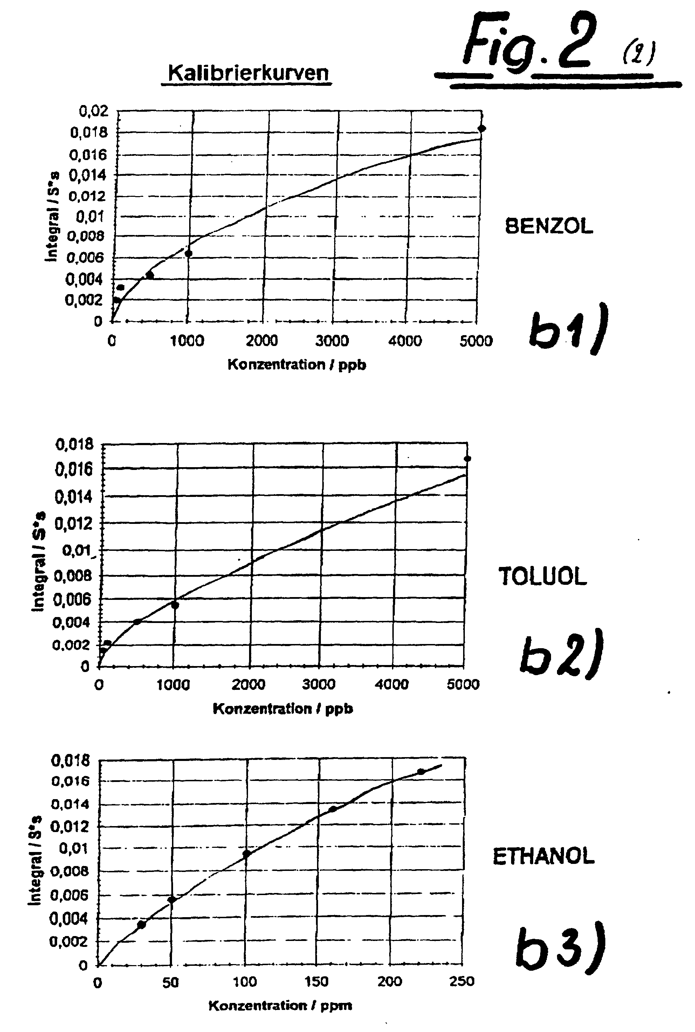

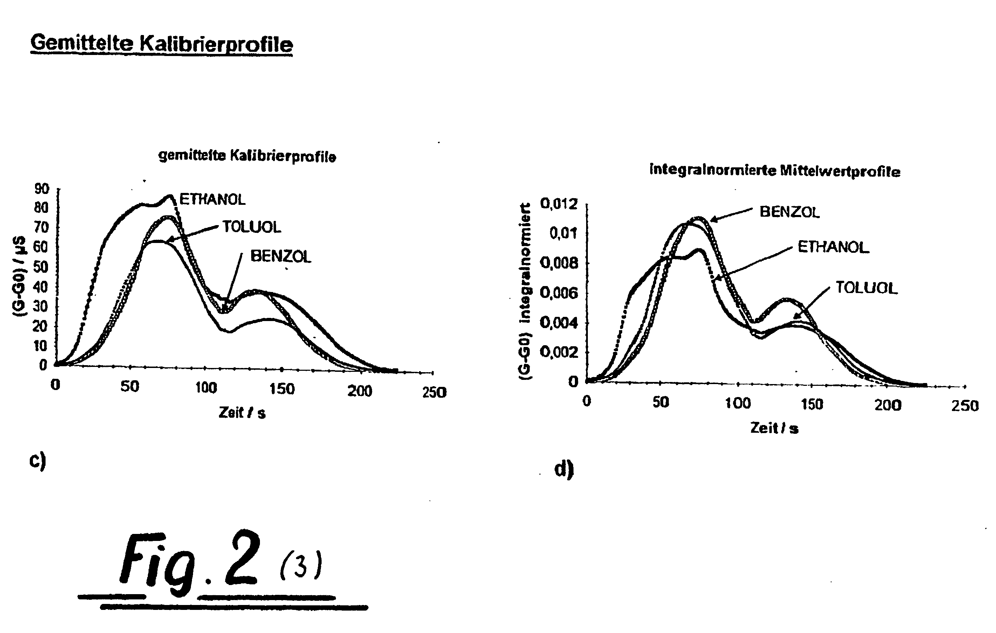

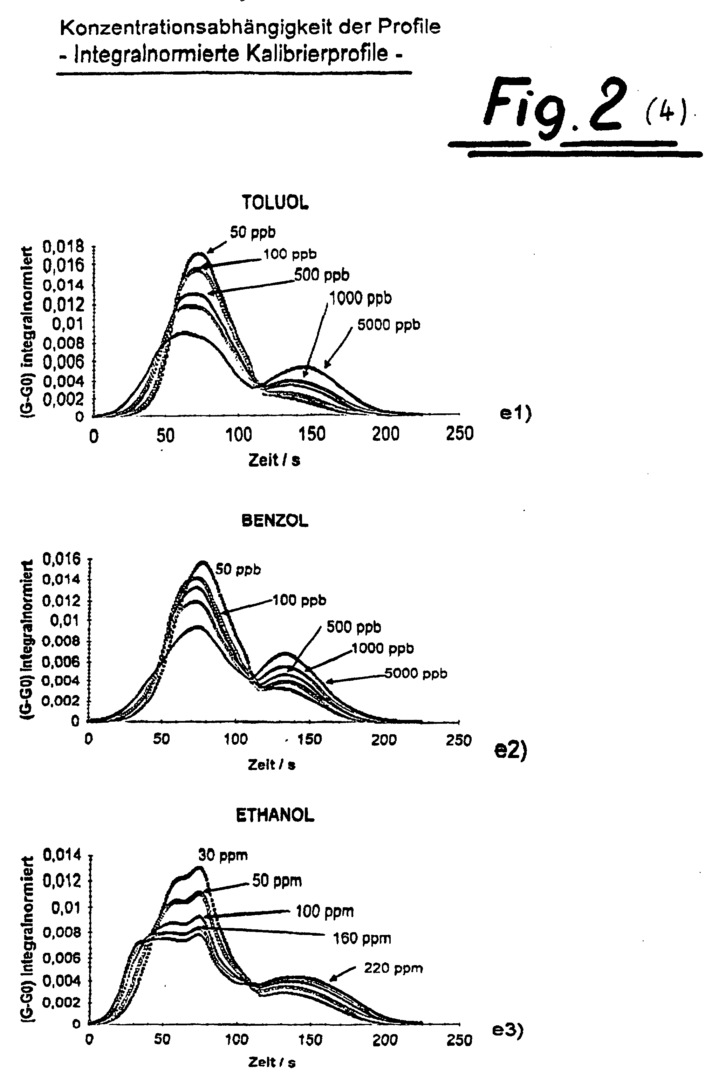

Nach dem Stand der Technik werden diese Leitwert-Zeit-Profile allein dazu herangezogen, um eine unbekannte Gasprobe qualitativ, d. h. hinsichtlich ihrer Art, zu identifizieren. Ein Verfahren, bei dem solche gasart- und gaskonzentrationsspezifischen Leitwert-Zeit-Profile als Kalibrierprofile dazu verwendet werden, um bei einer unbekannten Gas(gemisch)probe deren quantitative Zusammensetzung zu ermitteln, ist bisher unbekannt. So beschreiben beispielsweise WU und KO (Sensor and Actuators, B1 (1990), 183-187, Elsevier Sequoia, Netherlands) zwar einerseits, daß jedes Gas verschiedene Leitwert-Zeit-Profile in Abhängigkeit von der jeweils vorliegenden Konzentration aufweist, andererseits schreiben die Autoren ausrücklich, daß diese Unterschiede ohne Bedeutung sind (vgl. Fig. 5 und S. 185 - 186 dieser Publikation) und daß das allen konzentrationsspezifischen Einzelkurven zugrundeliegende Grundmuster das spezifische Leitwertverhalten für das betreffende Gas repräsentiert, d. h. das charakteristische Leitwert-Zeit-Profil (Referenzprofil) für das betreffende Gas darstellt. Die im Rahmen der Erfindung gefundenen Ergebnisse (vgl. Fig. 2) zeigen jedoch, daß diese Einschätzung der Verhältnisse der Autoren WU und KO für eine quantitative Gasanalyse unzureichend ist: Tatsächlich können die Leitwert-Zeit-Profile verschiedener Gase ähnlicher sein, als Profile des gleichen Gases bei verschiedenen Konzentrationen. Festzuhalten bleibt insoweit, daß die Aufnahme von Leitwert-Zeit-Profilen alleine jedenfalls keine quantitative Gasdetektion zuläßt, weil diese konzentrationsabhängig sind.

Darüberhinaus weisen die Referenzprofile oft nur sehr wenige und zudem häufig nur schwach ausgeprägte charakteristische Merkmale, wie z. B. Peaks oder Plateaus, auf, mit der Folge, daß sich manche Profile stark ähneln. Im Fall eines Gemisches aus Einzelgasen (Reingasen) mit derart ähnlichen und damit verwechselbaren Referenzprofilen besteht dann die Gefahr, daß die Anteile der Einzelgase (Reingase) an dem gemessenen Leitwertprofil des Gemisches gar nicht oder zumindest nicht sicher bestimmt werden können und somit auch das qualitative Analyseergebnis in Frage stellen.

Die EP-A-0 092 068 offenbart eine Alarmanlage für Gase und/oder Dämpfe. Gemäß dem Dokument wird ein auf Gase und/oder Dämpfe empfindliches Sensorelement in mindestens zweimaligem Temperaturzyklus nach einem vorgegebenen, für bestimmte Gase optimierten Muster kontinuierlich von einem Anfangswert auf einen oberen Wert aufgeheizt. Die Temperatursenkung auf den Anfangswert erfolgt nach dem gleichen oder einem anderen Muster. Eine elektronische Auswerteschaltung vergleicht während der Temperaturzyklen das vom Sensorelement gelieferte Signal, das von der Zusammensetzung der Gas- oder Dampfatmosphäre abhängt, mit gespeicherten Werten, die charakteristisch für das Vorhandensein bestimmter Gas- und/oder Dempfkomponenten sind.

R. M. Hawk & A. Narayanaswamy (1995), J. Vac. Sci. 13, 996 - 1000, offenbaren eine Methode zur Erhöhung der Selektivität von Gassensoren auf SnO₂-Basis zur Überwachung brennbarer Gase in Prozeß-Milieus.

Die Aufgabe der vorliegenden Erfindung besteht darin, Verbesserungen bei der Gasdetektion und/oder -analyse für die gewerbliche Anwendung bereit zu stellen.

Die Lösung der Aufgabe ergibt sich aus den Merkmalen der unabhängigen Ansprüche. Vorteilhafte Ausführungsformen finden sich in den Unteransprüchen.

Gemäß einem ersten wesentlichen Aspekt der Erfindung wird somit ein Verfahren zur qualitativen und/oder quantitativen Bestimmung einer Konzentration von zumindest einer Gaskomponente mittels zumindest eines nach einem zyklisch vorgegebenen Heizprofil beheizten Halbleiter-Gassensors vorgesehen, wobei vorgeschlagen wird, daß als Kalibrierprofile, aufgenommen während des zyklisch vorgegebenen Heizprofils des Detektorelements, in Abhängigkeit von der Konzentration der zumindest einen Gaskomponente zumindest zwei Leitwert-Zeit-Profile aufgezeichnet werden und daß die zumindest eine zu bestimmende Gaskomponente während des gleichen, zyklisch vorgegebenen Heizprofils als konzentrationsabhängiges Leitwert-Zeit-Profil in Form eines Probenprofils aufgezeichnet und mit den Kalibrierprofilen verglichen wird, wobei als Vergleichsvorlage zur Bestimmung der zumindest einen Gaskomponente und/oder deren Konzentration die Profilform und/oder die Profilfläche der aufgezeichneten Kalibrier- und Probenprofile verwendet werden.

Mit anderen Worten besteht der Kern der vorliegenden Erfindung darin, ein - insbesondere als Gaswarngerät verwendbares - Gasanalysegerät anzugeben, mit dem Gase beziehungsweise Gasgemische sowohl hinsichtlich ihrer Zusammensetzung als auch hinsichtlich der Konzentration der einzelnen Gaskomponenten schnell und ohne zusätzliche Einrichtungen, insbesondere ohne ergänzende Laboruntersuchungen, analysiert werden können.

Dabei hat sich gezeigt, daß eine Variation des Zyklus der Arbeitstemperatur dahingehend, daß zwischen den Zyklen eine Verweilzeit bei konstanter, insbesondere Raumtemperatur eingeschoben wird, bessere Ergebnisse ergibt.

Es wurde nämlich überraschenderweise gefunden, daß die Leitwertprofile für die einzelnen Gasarten sehr viel stärker strukturiert sind, wenn der Temperaturzyklus des Sensors eine Verweilphase (lag-Phase) bei niedrigen Temperaturen umfaßt. Die auf diese Weise erhaltenen Leitwertprofile sind so ausgeprägt strukturiert, daß die Gefahr einer Verwechslung von Leitwertprofilen verschiedener Gase praktisch ausgeschlossen werden kann. Selbst Gase, die mit den herkömmlichen Meßverfahren sehr ähnliche Profile ergeben, zeigen mit dem erfindungsgemäßen Verfahren deutlich voneinander verschiedene Profilstrukturen.

Die Auswerte- und Verküpfungseinheit ist insbesondere dazu geeignet, einen Vergleich zwischen den Meßwerten und den Kalibrierprofilen zu erstellen und eine Auswahl derselben unter Berücksichtigung der Konzentrationsabhängigkeit der Profilform zu treffen.

Das erfindungsgemäße Verfahren ist mit praktisch allen handelsüblichen Sensorelementen aus der Familie der Halbleiter-Gassensoren durchführbar und ermöglicht somit eine preiswerte Selektivitätssteigerung der bekannten und ansonsten bewährten und für eine Vielzahl von Anwendungen sehr attraktiven Sensorelemente. Mit dem erfindungsgemäßen Gerat kann nicht nur die Qualität bestehender Gasdetektionsaufgaben mit Überwachungscharakter verbessert, sondern auch eine ganze Reihe bisher unerschlossener Problemstellungen bewältigt werden. Beispiele hierfür sind einerseits die selektive Detektion verschiedener Lösungsmittel (sowohl am Arbeitsplatz als auch in der Umwelt) aufgrund der unterschiedlichen Toxizitäten der Substanzen, und andererseits die sichere Detektion von Erd- oder Stadtgas neben Lösungsmitteldämpfen oder Zigarettenrauch aufgrund der unterschiedlichen Gefährlichkeit und infolgedessen unterschiedlichen erforderlichen Sofortmaßnahmen.

Mit den erfindungsgemäßen, selektiven Halbleiter-Gassensoren ist eine beschränkte, prozeßangepaßte, kontinuierliche und trotzdem kostengünstige Analytik und damit Echtzeit-Prozeßüberwachung möglich (bei nur gelegentlicher Überprüfung durch Laboruntersuchungen). Durch die niedrigen Kosten ist es wirtschaftlich vertretbar, statt mit einigen wenigen Meßstellen mit ganzen Meßfeldern ein vollständiges Bild einer Kontamination und ihrer zeitlichen Entwicklung zu erhalten. Es ist möglich, die Größe einer Sanierungsanlage auf das tatsächlich benötigte Maß zu reduzieren und durch optimierte Prozeßführung Energie einzusparen und gleichzeitig schneller den gewünschten Sanierungserfolg herbeizuführen.

Bei Einsatz der Erfindung in Verbindung mit der Überwachung von Abwässern oder Abluft kann nicht nur das Vorliegen einer Betriebsstörung detektiert werden, sondern es können durch die Selektivität auch zusätzliche Informationen über die mögliche Ursache unmittelbar gewonnen werden, was eine erheblich schnellere und gezieltere Ursachenbeseitigung ermöglicht. Damit kann die Verfügbarkeit von Industrieanlagen erhöht werden.

In normalen Überwachungsaufgaben können Fehlalarme durch die selektive Gaswahrnehmung wesentlich reduziert und die Kosten der fehlausgelösten Maßnahmen eingespart werden.

Im Rahmen von Qualitätskontrollen können auch olefaktorische Prüfaufgaben (z.B. bei Lebensmitteln) durchgeführt werden.

Das erfindungsgemäße Gasanalysegerät bzw. Gaswarngerät reiht sich in der Anwendung ein zwischen Laboranalysegeräten (der Gaschromatographie, Flüssigchromatographie, Massenspektroskopie, Spektroskopie, ...) mit der Fähigkeit zu Detailanalysen und einfachen Sensoren, die nur globale Änderungen registrieren können.

Die Erfindung wird im folgenden anhand der Zeichnung näher erläutert: Diese zeigt in
- Fig. 1: ein Blockschaltbild eines Gaswarngeräts;
- Fig. 2: die Funktions- / Betriebsweise der Auswerteund Verknüpfungseinheit anhand einer Folge von Diagrammdarstellungen;
- Fig. 3: eine Darstellung des Temperaturverlaufs der Arbeitstemperatur des Halbleiter-Gassensors.

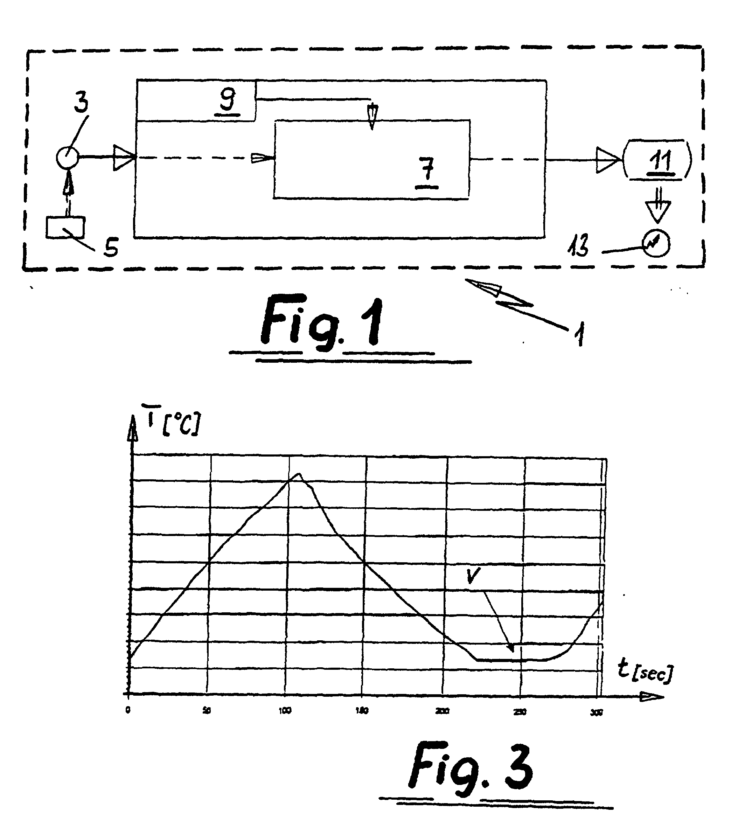

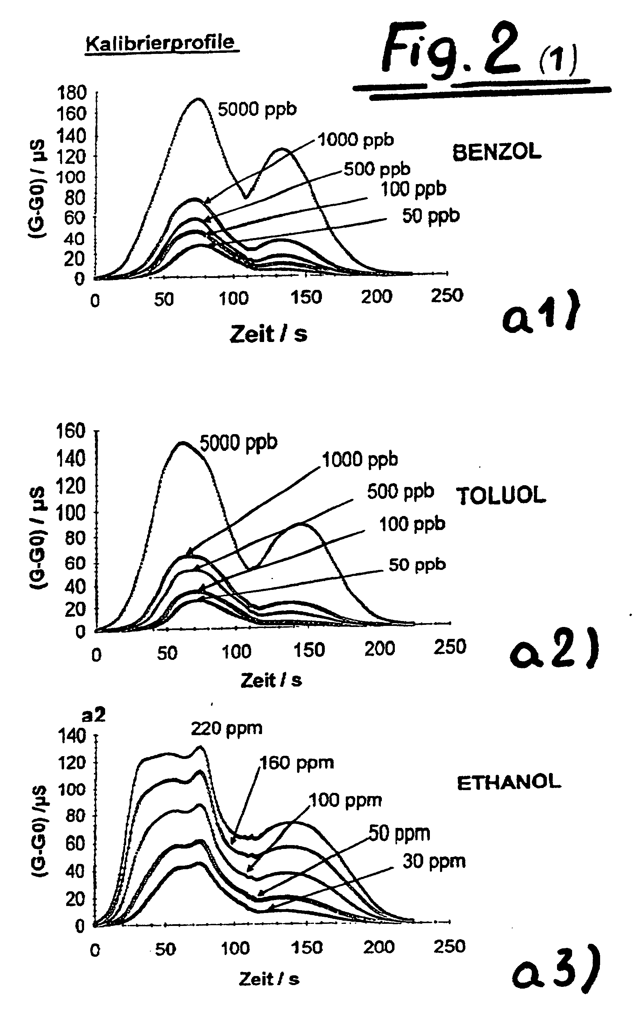

In Fig. 1 ist ein Gaswarngerät 1 gezeigt, das gleichermaßen als mobiles oder stationäres Gerät konzipiert sein kann.

Das Gaswarngerät 1 umfaßt einen Halbleiter-Gassensor 3, der einerseits mit einer Temperatursteuerung 5 und andererseits mit dem Eingang einer arithmetisch-logischen Auswerte- und Verknüpfungseinheit 7 gekoppelt ist. Über die Temperatursteuerung 5 wird die Oberfläche des Halbleiter-Gassensors 3 zyklisch erwärmt und abgekühlt; ausgangsseitig gibt der Halbleiter-Gassensor dann (Gas-) Meßwerte ab, die das zu messende Gas beziehungsweise Gasgemisch repräsentieren.

In der Auswerte- und Verknüpfungseinheit 7 werden diese Meßwerte mit aus einem Speicher 9 ausgelesenen Kalibrierwerten arithmetisch-logisch verarbeitet und verglichen. Die aus dem Speicher 9 ausgelesenen Kalibrierwerte entsprechen Meßwerten, die in einem separaten Kalibriervorgang gemessen und im Speicher eingeschrieben wurden.

Nach Beendigung der arithmetisch-logischen Verarbeitung der aktuellen Meßwerte und der im voraus gespeicherten Kalibrierwerte in der Auswerte- und Verknüpfungseinheit 7 wird das Ergebnis auf einer Anzeigeeinrichtung 11 zur Anzeige gebracht. Für den Fall, daß ein vorgegebener Grenzwert für ein Gas überschritten wird, gibt die Anzeigeeinrichtung 11 ein Ansteuersignal an einen Signalgenerator 13 ab, der schließlich einen Alarm auslöst.

Die Auswerte- und Verknüpfungseinheit ist insbesondere dazu geeignet, einen Vergleich zwischen den Meßwerten und den Kalibrierprofilen zu erstellen und eine Auswahl derselben unter Berücksichtigung der Konzentrationsabhängigkeit der Profilform zu treffen.

Die Funktions- und Arbeitsweise des anhand von Fig. 1 beschriebenen Gaswarngeräts wird im folgenden anhand von Fig. 2 näher erläutert:
1. Die Analysemethode ist beschränkt auf den Nachweis einer Gruppe von möglichen Gaskomponenten in einem Trägermedium (i. allg. Luft), die in der zu analysierenden Probe (Einzelgas oder Gasgemisch) vorkommen können/dürfen.
   Die Zusammensetzung der Gaskomponentengruppe (des Gaskomponentensatzes) ist vorher festzulegen und dem aktuellen Meßproblem anzupassen.
2. Zu jeder in Betracht kommenden Gaskomponente werden Kalibrierprofile (Leitwerte/Sensortemperatur bzw. Zeit) für verschiedene Gaskonzentrationen erstellt (vgl. Fig. 2a1, 2a2, 2a3).
   Zusätzlich wird anhand dieser verschiedenen, konzentrationsspezifischen Kalibrierprofile einer bestimmten Gaskomponente ein sog.
   "Mittelwertprofil" dieses Gases aufgestellt, das durch arithmetische Mittelwertbildung der betreffenden Einzelprofile gebildet wird (vgl. Fig. 2c).
   Diese Kalibrierprofile einerseits und die Mittelwertprofile andererseits dienen letztendlich als Vergleichsvorlagen, anhand derer ein gemessenes Probenprofil eines unbekannten Gases/Gasgemisches identifiziert wird, und zwar entweder eindeutig - im Fall von identischer Übereinstimmung - oder nur mutmaßlich - im Fall von Ähnlichkeiten in charakteristischen Merkmalen.
3. Zu jeder Gaskomponente wird die Abhängigkeit der Kalibrierprofile von der Gaskonzentration dargestellt, und zwar als Funktion der Kalibrierprofil-Integrale (der sog. Kalibrierwerte) über der Gaskonzentration (vgl. Fig. 2b1, 2b2, 2b3) .
   D.h.: Von jedem Kalibrierprofil wird das Integral bestimmt und als sog. Kalibrierwert gegen die dazugehörige Gaskonzentration in einer sog. Kalibrierkurve aufgetragen. Die die Kalibrierkurve bildenden Wertepaare Kalibrierwert/Konzentration werden im folgenden Kalibrierpunkte genannt. (Diese Kalibrierkurve wird durch numerische Approximation mit den Kalibrierpunkten ermittelt.)
4. Um die Struktur der Kalibrierprofile und auch der Mittelwertprofile unabhängig (unbeeinflußt) von der Konzentration darzustellen, werden die einzelnen Profile integralnormiert, d.h. jedes Wertepaar Leitwert/Zeit (bzw. Temperatur) eines Profils wird durch den Integralwert dieses Profils dividiert. Dadurch wird das betreffende Kalibrierprofil bzw. Mittelwertprofil auf den Integralwert "1" normiert (vgl. Fig.2d und Fig. 2e1, 2e2, 2e3).
5. Zur Identifizierung der Gaskomponente(n) in einer zu analysierenden Probe wird zunächst das Leitwertprofil dieser Probe - im folgenden "Probenprofil" genannt, gemessen (vgl. Fig. 2f).
   Dieses Probenprofil wird dann mit den integralnormierten Mittelwertprofilen der in Betracht kommenden Gaskomponente verglichen, und es wird geprüft,
   5.1) welches integralnormierte Mittelwertprofil bzw. welche Kombination welcher integralnormierten Mittelwertprofile (in linearer Addition) diesem Probenprofil hinsichtlich der Profilstruktur (d.h. der Profilform bzw. des Profilverlaufs) am ähnlichsten ist, (vgl. Fig. 2f: Probenprofil, Einzelprofile und "Additionsprofil") und
   5.2) mit welchem Multiplikator die Integrale der in (5.1) ermittelten integralnormierten Mittelwertprofile in dem Probenprofil enthalten sind.
      Die Multiplikatoren werden so gewählt, daß das Additionsprofil dem Probenprofil optimal nahe kommt.

   Das Ergebnis aus (5.1) liefert die Information, welche Gaskomponenten (aller Wahrscheinlichkeit nach) in der Probe vorliegen - im dargestellten Beispiel sind dies Benzol, Ethanol und Toluol; das Ergebnis aus (5.2) gibt erste Hinweise darauf, in welcher Konzentration die betreffenden Gaskomponenten vorliegen.
   Um die Konzentration(en) näher zu bestimmen, werden die folgenden Schritte durchgeführt:
6. Anhand des in (5.2) geschätzten Multiplikators für das Integral des betreffenden normierten Mittelwertprofils wird mit Hilfe der dazugehörigen Kalibrierkurve (vgl. (3) und Fig. 2b1, 2b2, 2b3) auf die Konzentration der betreffenden Gaskomponente zurückgeschlossen. Der hierdurch gefundene (bzw. geschätzte) Konzentrationswert gibt die Information, welches der in (2) ermittelten, konzentrationsabhängigen Kalibrierprofile (vgl. Fig. 2a1, 2a2, 2a3) am ehesten in dem Probenprofil enthalten ist.
7. Mit diesem aus (6) stammenden Kalibrierprofil bzw. diesen Kalibrierprofilen der in (5.1) ermittelten Gaskomponten wird die Berechnung gemäß (5.2) erneut durchgeführt, d.h es werden die dazugehörigen integralnormierten Kalibrierprofile (vgl. (4) und Fig. 2e1, 2e2, 2e3) herangezogen und erneut ermittelt, mit welchem Anteil diese Integrale in dem Probenprofil enthalten sind.
   Dem gewonnenen Integralwert (z.B.: dem 1,7-fachen der tatsächlichen Fläche des integralnormierten Kalibrierprofils von Etanol in der Konzentration 100 ppm) wird wieder (vgl. (6)) anhand der dazugehörigen Integralkurve (vgl. (3)) ein Konzentrationwert zugeordnet.
   Dieser Konzentrationswert kommt den tatsächlichen Verhältnissen in der Probe näher als der in (5.2) anhand des integralnormierten Mittelwertprofils ermittelte Wert.
8. Der Schritt (7) wird dann so oft durchgeführt (Iteration), bis das jüngste Eregbnis von dem zuvor gewonnenen Ergebnis nicht mehr (wesentlich) abweicht (Konvergenz) .

Diese neue Analyse- bzw. Berechnungsmethode ist der herkömmlichen Methode der numerischen Profilauswahl nach dem Prinzip der geringsten Standardabweichung zwischen gemessener und synthetisierter Kurve weit überlegen. Sie ist nicht nur signifikant genauer, sondern erfordert auch weit weniger Aufwand als die herkömmliche Profilauswahl unter Berücksichtigung der geringsten Standardabweichung. Letzteres kommt insbesondere bei mikroprozessorunterstützten Analysen zum tragen, die bei Anwendung der erfindungsgemäßen Methode mit erheblich geringerem Kostenaufwand durchgeführt werden können.

Das geschilderte Verfahren führt zu erstaunlich genauen Analyseergebnissen insbesondere bei einkomponentigen Gasen. Bei Gasgemischen werden die Komponenten sicher erkannt und mit ausreichender Genauigkeit detektiert (vgl. nachfolgende Tabelle ). Die mit dem erfindungsgemäßen Meßverfahren erreichbare Selektivität ist bei weitem höher als die mit den konventionellen Verfahren erzielbare. Das erfindungsgemäße Verfahren hat darüberhinaus den Vorteil, daß grundsätzlich alle auf dem Markt verfügbaren Sensorelemente einsetzbar sind, und somit in jedem konkreten Anwendungsfall das dafür jeweils geeignetste ausgewählt werden kann.

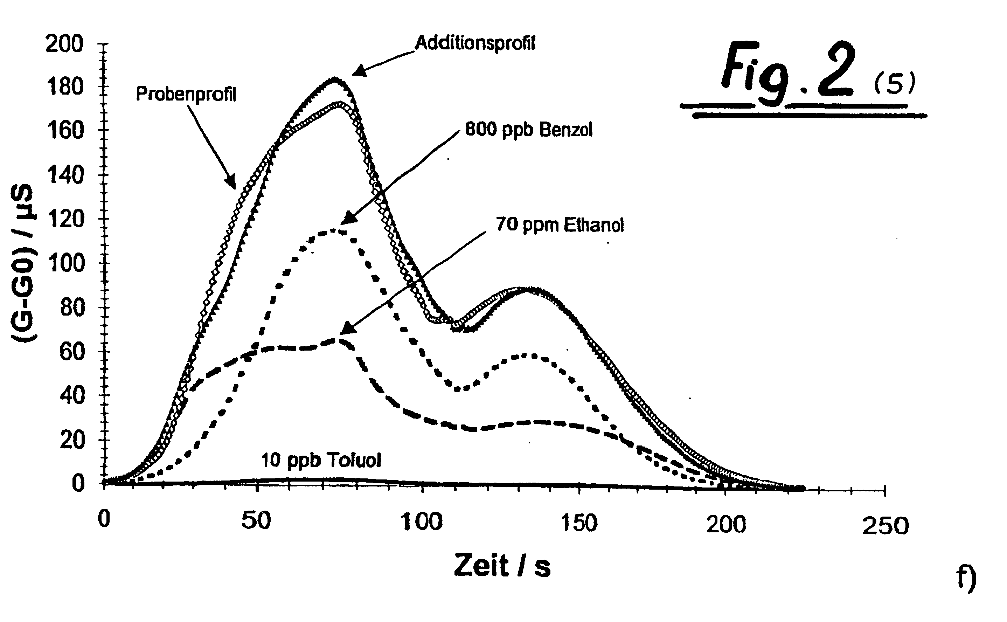

Fig. 3 zeigt die Funktion der Temperatursteuerung (5 aus Fig.1) insoweit, als die Temperatur T (°C) an der Oberfläche des Halbleiter-Gassensors (3 in Fig. 1) über die Zeitachse t (sec) aufgetragen ist. Der Temperaturverlauf folgt hier einer Zick-Zack-Kurve, wobei - einer besonderen Ausgestaltung des Gasanalyse- bzw. -warngeräts entsprechend - jeweils zwischen zwei Temperaturzyklen eine Verweilphase (Ruhephase V) bei konstanter Temperatur, insbesondere Raumtemperatur, eingefügt ist. (Wie bereits eingangs erwähnt, kann die Temperaturkurve auch sinusförmig ausgebildet sein.)

## Patentansprüche

1. Gasanalysegerät insbesondere Gaswarngerät, zur Identifikation und/oder quantitativen Bestimmung der Konzentration von einer Gaskomponente
mit einem nach einem zyklisch vorgegebenen Heizprofil beheizten Halbleiter-Gassensor (3),
**gekennzeichnet durch**
a) ein Aufzeichnungsmittel, um als Kalibrierprofile während des zyklisch vorgegebenen Heizprofils des Detektorelements in Abhängigkeit von der Konzentration der zumindest einen Gaskomponente zumindest zwei Widerstands- beziehungsweise Leitwert-Zeit-Profile aufzuzeichnen,
b) eine Auswerte- und Verknüpfungseinheit, um zumindest eine zu bestimmende Gaskomponente während des gleichen zyklisch vorgegebenen Heizprofils als konzentrationsabhängiges Widerstands- beziehungsweise Leitwert-Zeit-Profil in Form eines Probenprofils aufzuzeichnen und mit den Kalibrierprofilen zu vergleichen, und aus dem Vergleich des Probenprofils mit den Kalibrierprofilen als Ergebnis mindestens eine aktuelle Gaskomponente und/oder Konzentration liefert,
c) ein Anzeigemittel, das aus dem Vergleich des Probenprofils mit den Kalibrierprofilen als Ergebnis mindestens eine aktuelle Gaskomponente und/oder Konzentration liefert.

2. Gasanalysegerät nach dem vorhergehenden Anspruch **dadurch gekennzeichnet, daß** eine Ausgabeeinheit oder elektronische Schnittstelle vorgesehen ist, um die Weiterverarbeitung des Meßergebnisses, Anzeige und/oder eine Registrierung und/oder eine Alarmierung zu ermöglichen.

3. Gasanalysegerät beziehungsweise Gaswarngerät nach einem der vorhergehenden Ansprüche, **dadurch gekennzeichnet, daß** die Auswerte- und Verknüpfungseinheit dazu ausgelegt ist, als Vergleichsgröße zur Bestimmung der zumindest einen Gaskomponente und/oder deren Konzentration die Profilform und/oder die Profilfläche der aufgezeichneten Kalibrier- und Probenprofile auszuwerten.

4. Gasanalysegerät beziehungsweise Gaswarngerät nach einem der vorhergehenden Ansprüche, **dadurch gekennzeichnet, daß** die Auswerte- und Verknüpfungseinheit dazu ausgebildet ist, eine Abhängigkeit der Profilform von der Konzentration der zumindest einen Gaskomponente bei dem Vergleich von Probenprofil und Kalibrierprofilen zu berücksichtigen.

5. Gasanalysegerät beziehungsweise Gaswarngerät nach Anspruch 4, **dadurch gekennzeichnet,**
**daß** die Auswerte- und Verknüpfungseinheit dazu ausgebildet ist, Probenprofil und Kalibrierprofile durch iterativen Vergleich ausgehend von einer gemittelten Kalibrierprofilform zu berücksichtigen.

6. Gasanalysegerät beziehungsweise Gaswarngerät nach einem der vorhergehenden Ansprüche, **dadurch gekennzeichnet, daß** ein Normierungsmittel vorgesehen ist zur qualitativen Bestimmung des Gases beziehungsweise Gasgemisches, um die Proben- und Kalibrierprofile zu normieren.

7. Gasanalysegerät beziehungsweise Gaswarngerät zumindest nach einem der vorhergehenden Ansprüche, **dadurch gekennzeichnet,**
**daß** ein Heizprofilvorgabemittel vorgesehen ist, das dazu ausgebildet ist, das Heizprofil eines Detektorelementes des Halbleiter-Gassensors zyklisch so vorzugeben, dass es zumindest eine Verweilzeit bei Temperatur niedriger als Maximaltemperatur umfaßt.

8. Gasanalysegerät beziehungsweise Gaswarngerät nach Anspruch 7, **dadurch gekennzeichnet,**
**daß** das Heizprofilmittel so ausgebildet ist, dass die Temperatur während der Verweilzeit zumindest annähernd konstant ist.

9. Gasanalysegerät beziehungsweise Gaswarngerät nach Anspruch 7 oder 8, **dadurch gekennzeichnet,**
**daß** das Heizprofil so ausgebildet ist, dass die niedrige Temperatur Raumtemperatur ist.

10. Verfahren zur Identifikation und/oder quantitativen Bestimmung der Konzentration von zumindest einer Gaskomponente mittels eines nach einem zyklisch vorgegebenen Heizprofil beheizten Detektorelements eines Halbleiter-Gassensors, **dadurch gekennzeichnet,**
**daß** als Kalibrierprofile während des zyklisch vorgegebenen Heizprofils des Detektorelements in Abhängigkeit von der Konzentration der zumindest einen Gaskomponente zumindest zwei Widerstands- beziehungsweise Leitwert-Zeit-Profile aufgezeichnet werden und die zumindest eine zu bestimmende Gaskomponente während des gleichen, zyklisch vorgegebenen Heizprofils als konzentrationsabhängiges Widerstands- beziehungsweise Leitwert-Zeit-Profil in Form eines Probenprofils aufgezeichnet und mit den Kalibrierprofilen verglichen wird, wobei als Vergleichsvorlage zur Bestimmung der zumindest einen Gaskomponente und/oder deren Konzentration die Profilform und/oder die Profilfläche der aufgezeichneten Kalibrier- und Probenprofile verwendet werden.

11. Verfahren nach Anspruch 10, **dadurch gekennzeichnet, daß** eine Abhängigkeit der Profilform von der Konzentration der zumindest einen Gaskomponente bei dem Vergleich von Probenprofil und Kalibrierprofilen berücksichtigt wird.

12. Verfahren nach Anspruch 11, **dadurch gekennzeichnet, daß** die Berücksichtigung durch iterativen Vergleich von Probenprofil und Kalibrierprofilen ausgehend von einem Mittelwertprofil erfolgt.

13. Verfahren nach einem der vorhergehenden Verfahrensansprüche, **dadurch gekennzeichnet, daß** zur qualitativen Bestimmung des Gases/Gasgemisches die Proben- und Kalibrierprofile normiert werden.

14. Verfahren nach einem der vorhergehenden Verfahrensansprüche, **dadurch gekennzeichnet,**
**daß** das zyklisch vorgegebene Heizprofil des Detektorelements zumindest eine Verweilzeit bei einer relativ niedrigen Temperatur beinhaltet.

15. Verfahren nach Anspruch 14, **dadurch gekennzeichnet,**
**daß** die Temperatur während der Verweilzeit im wesentlichen konstant gehalten wird.

16. Verfahren nach Anspruch 14 oder 15, **dadurch gekennzeichnet,**
**daß** als Verweilzeittemperatur Raumtemperatur gewählt wird.

## Claims

1. Gas analysis apparatus, in particular gas warning apparatus, for identification and/or quantitative determination of the concentration of a gas component using a semiconductor gas sensor (3) heated according to a cyclically preset heating profile, **characterised by**
a) a recording means to record at least two resistance-time or conductance-time profiles as calibration profiles during the cyclically preset heating profile of the detector element as a function of the concentration of the at least one gas component,
b) an evaluating and linking unit to record at least one gas component to be determined during the same cyclically preset heating profile as concentration-dependent resistance-time or conductance-time profile in the form of a sample profile and to compare it with the calibration profiles, and from the comparison of the sample profile with the calibration profiles provides as a result at least one current gas component and/or concentration,
c) a display means, which, from the comparison of the sample profile with the calibration profiles, provides as a result at least one current gas component and/or concentration.

2. Gas analysis apparatus according to the preceding claim, **characterised in that** an output unit or electronic interface is provided in order to facilitate further processing of the measured result, display and/or registration and/or an alarm.

3. Gas analysis apparatus or gas warning apparatus according to one of the preceding claims, **characterised in that** the evaluating and linking unit is designed to evaluate the profile shape and/or the profile area of the recorded calibration and sample profiles as a comparative parameter to determine the at least one gas component and/or its concentration.

4. Gas analysis apparatus or gas warning apparatus according to one of the preceding claims, **characterised in that** the evaluating and linking unit is designed to take into account dependence of the profile shape on the concentration of the at least one gas component in the comparison of sample profile and calibration profiles.

5. Gas analysis apparatus or gas warning apparatus according to claim 4, **characterised in that** the evaluating and linking unit is designed to take into account sample profile and calibration profiles by iterative comparison starting from an averaged calibration profile shape.

6. Gas analysis apparatus or gas warning apparatus according to one of the preceding claims, **characterised in that** a standardising means is provided for qualitative determination of the gas or gas mixture to standardise the sample and calibration profiles.

7. Gas analysis apparatus or gas warning apparatus at least according to one of the preceding claims, **characterised in that** a heating profile default means is provided, which is designed to preset the heating profile of a detector element of the semiconductor gas sensor cyclically so that it comprises at least one dwell time at temperature lower than maximum temperature.

8. Gas analysis apparatus or gas warning apparatus according to claim 7, **characterised in that** the heating profile means is designed so that the temperature is at least approximately constant during the dwell time.

9. Gas analysis apparatus or gas warning apparatus according to claim 7 or 8, **characterised in that** the heating profile is designed so that the low temperature is room temperature.

10. Process for identification and/or quantitative determination of the concentration of at least one gas component by means of a detector element of a semiconductor gas sensor heated according to a cyclically preset heating profile, **characterised in that** at least two resistance-time or conductance-time profiles are recorded as calibration profiles during the cyclically preset heating profile of the detector element, as a function of the concentration of the at least one gas component, and the at least one gas component to be determined during the same, cyclically preset heating profile as concentration-dependent resistance-time or conductance-time profile is recorded in the form of a sample profile and compared with the calibration profiles, wherein the profile shape and/or the profile area of the recorded calibration and sample profiles are used as a comparative model to determine the at least one gas component and/or its concentration.

11. Process according to claim 10, **characterised in that** a dependence of the profile shape on the concentration of the at least one gas component is taken into account in the comparison of sample profile and calibration profiles.

12. Process according to claim 11, **characterised in that** consideration is effected by iterative comparison of sample profile and calibration profiles starting from an average value profile.

13. Process according to one of the preceding process claims, **characterised in that** the sample and calibration profiles are standardised for qualitative determination of the gas/gas mixture.

14. Process according to one of the preceding process claims, **characterised in that** the cyclically preset heating profile of the detector element contains at least one dwell time at a relatively low temperature.

15. Process according to claim 14, **characterised in that** the temperature during the dwell time is kept essentially constant.

16. Process according to claim 14 or 15, **characterised in that** room temperature is selected as dwell time temperature.

## Revendications

1. Appareil d'analyse de gaz, notamment d'alarme de gaz, destiné à l'identification et/ou la détermination quantitative de la concentration d'un composant gazeux, comportant un capteur de gaz à semi-conducteurs (3) chauffé selon un profil de chauffage cyclique prédéfini, **caractérisé par** :
(a) un moyen d'enregistrement, pour enregistrer en tant que profils d'étalonnage, pendant le profil de chauffage cyclique prédéfini de l'élément détecteur, en fonction de la concentration des composants gazeux, au moins au nombre de un, au moins deux profils de résistance ou conductance-temps,
(b) une unité d'exploitation et de combinaison, pour enregistrer au moins un composant gazeux à déterminer pendant le profil de chauffage cyclique prédéfini en tant que profil de valeur de résistance- ou de conductance-temps, dépendant de la concentration, sous la forme d'un profil d'échantillonnage, et le comparer aux profils d'étalonnage, puis fournir comme résultat, à partir de la comparaison du profil d'échantillonnage avec les profils d'étalonnage, au moins un composant gazeux actuel et/ou une concentration,
(c) un afficheur qui donne en tant que résultat, à partir de la comparaison du profil d'échantillonnage avec les profils d'étalonnage, au moins un composant gazeux actuel et/ou une concentration.

2. Appareil d'analyse de gaz selon la revendication précédente, **caractérisé en ce qu'**une unité de sortie ou une interface électronique est prévue pour permettre le traitement ultérieur du résultat de mesure, l'affichage et/ou un enregistrement et/ou une alarme.

3. Appareil d'analyse de gaz ou appareil d'alarme de gaz selon l'une des revendications précédentes, **caractérisé en ce que** l'unité d'exploitation et de combinaison est conçue, en tant que grandeur de comparaison pour déterminer les composants gazeux, au moins au nombre de un, et/ou sa(leur) concentration, pour évaluer la forme de profil et/ou la surface de profil des profils d'étalonnage et d'échantillonnage enregistrés.

4. Appareil d'analyse de gaz ou appareil d'alarme de gaz selon l'une des revendications précédentes, **caractérisé en ce que** l'unité d'exploitation et de combinaison est conçue pour tenir compte d'un rapport de dépendance entre la forme de profil et la concentration des composants gazeux, au moins au nombre de un, lors de la comparaison du profil d'échantillonnage et des profils d'étalonnage.

5. Appareil d'analyse de gaz ou appareil d'alarme de gaz selon la revendication 4, **caractérisé en ce que** l'unité d'exploitation et de combinaison est conçue pour tenir compte du profil d'échantillonnage et des profils d'étalonnage par comparaison itérative, en partant d'une forme de profil d'étalonnage moyenne.

6. Appareil d'analyse de gaz ou appareil d'alarme de gaz selon l'une des revendications précédentes, **caractérisé en ce qu'**un moyen de normalisation est prévu pour une détermination qualitative du gaz ou du mélange de gaz, afin de normaliser les profils d'échantillonnage et d'étalonnage.

7. Appareil d'analyse de gaz ou appareil d'alarme de gaz selon l'une des revendications précédentes, **caractérisé en ce qu'**est prévu un moyen de prédétermination du profil de chauffage qui est conçu pour que le profil de chauffage d'un élément de détecteur du capteur de gaz à semi-conducteurs soit défini cycliquement pour comporter au moins un temps de séjour à une température inférieure à la température maximale.

8. Appareil d'analyse de gaz ou appareil d'alarme de gaz selon la revendication 7, **caractérisé en ce que** le moyen de profil de chauffage est conçu de façon à ce que la température soit au moins approximativement constante pendant le temps de séjour.

9. Appareil d'analyse de gaz ou appareil d'alarme de gaz selon la revendication 7 ou la revendication 8, **caractérisé en ce que** le profil de chauffage est conçu de façon telle que la faible température est la température ambiante.

10. Procédé d'identification et/ou de détermination quantitative de la concentration d'au moins un composant gazeux au moyen d'un élément détecteur d'un capteur de gaz à semi-conducteurs chauffé selon un profil de chauffage cyclique prédéterminé, **caractérisé en ce que**, en tant que profils d'étalonnage pendant le profil de chauffage de l'élément détecteur prédéterminé de façon cyclique, on enregistre, en fonction de la concentration des composants gazeux, au moins au nombre de un, au moins deux profils de résistance- ou de conductance-temps et **en ce que** les composants gazeux à déterminer, au moins au nombre de un, pendant le même profil de chauffage cyclique prédéfini, sont enregistrés en tant que profil de résistance- ou de conductance-temps fonction de la concentration sous la forme d'un profil d'échantillonnage, et comparé avec les profils d'étalonnage, où on utilise en tant que motif de comparaison pour déterminer les composants gazeux, au moins au nombre de un, et/ou sa(leur) concentration, la forme de profil et/ou la surface de profil des profils d'étalonnage et d'échantillonnage enregistrés.

11. Procédé selon la revendication 10, **caractérisé en ce que** l'on tient compte de la relation de dépendance entre la forme de profil et la concentration des composants gazeux, au moins au nombre de un, lors de la comparaison du profil d'échantillonnage et des profils d'étalonnage.

12. Procédé selon la revendication 11, **caractérisé en ce que** la prisé en compte se fait par comparaison itérative du profil d'échantillonnage et des profils d'étalonnage à partir d'un profil de valeurs moyennes.

13. Procédé selon l'une des revendications de procédé précédentes, **caractérisé en ce que**, pour déterminer de façon qualitative le gaz/mélange de gaz, on normalise les profils d'échantillonnage / d'étalonnage.

14. Procédé selon l'une des revendications de procédé précédentes, **caractérisé en ce que** le profil de chauffage cyclique prédéfini de l'élément détecteur contient au moins un temps de séjour à une température relativement faible.

15. Procédé selon la revendication 14, **caractérisé en ce que** la température est maintenue essentiellement constante pendant le temps de séjour.

16. Procédé selon la revendication 14 ou 15, **caractérisé en ce que** l'on sélectionne comme température de temps de séjour la température ambiante.
